(19) Europäisches Patentamt
European Patent Office
Office européen des brevets

(11) Publication number: 0 010 888
B1

(12) **EUROPEAN PATENT SPECIFICATION**

(45) Date of publication of patent specification: **12.10.83**

(21) Application number: **79302202.1**

(22) Date of filing: **12.10.79**

(51) Int. Cl.³: **C 08 L 81/04,** C 08 L 63/00, C 08 G 59/54, C 08 L 15/00, C 09 K 3/10, C 03 C 27/12, B 32 B 27/28

(54) **Compositions curable to rubbery solids, elastomeric reaction products thereof and articles comprising such reaction products.**

(30) Priority: **23.10.78 US 953825**

(43) Date of publication of application:
**14.05.80 Bulletin 80/10**

(45) Publication of the grant of the patent:
**12.10.83 Bulletin 83/41**

(84) Designated Contracting States:
**AT BE CH DE FR GB IT NL SE**

(56) References cited:
GB - A - 918 373
GB - A - 1 280 661
US - A - 4 055 541

S. BOSTRÖM, "Kautschuk-Handbuch", Band 2, 1960, BERLINER UNION, Stuttgart, pages 22 to 26

**The file contains technical information submitted after the application was filed and not included in this specification**

(73) Proprietor: **THIOKOL CORPORATION**
**P.O. Box 1000**
**Newtown Pennsylvania 18940 (US)**

(72) Inventor: **Paul 3rd, Henry Neill**
**538 Gravers Lane**
**Philadelphia, Pennsylvania 19118 (US)**

(74) Representative: **Hose, Cyril Gustav Bidwell et al,**
**Baron & Warren 18 South End Kensington**
**London W8 5BU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 010 888 B1

# Compositions curable to rubbery solids, elastomeric reaction products thereof and articles comprising such reaction products

This invention relates to compositions containing liquid polysulfide polymers, more especially liquid thiol terminated polysulfide polymers, to the curing thereof, particularly co-curing with other functionally suitable polymers and to the production of insulated glass windows, particularly the fabrication of sealants therefor.

The use of liquid thiol terminated polysulfide polymers in the formulation of sealants for insulated glass window sandwiches is well known and such sealants are in commercial use. These sealants, because of their polar nature, are somewhat permeable to water vapor. For maximum exclusion of water vapor from the interior of insulated window sandwiches the application of a first sealant layer with a high impermeability to moisture vapor, such as a butyl latex caulk, has hitherto been required in commercial practice. These highly impermeable caulks or sealants have inherently low physical strength and thus the use of a second higher strength sealant, such as the polysulfide based sealants, or a mechanical support means has been required to attain an adequate balance of maximum moisture exclusion and structural strength.

Two component compositions which cure at room temperature are already known from U.S. Specification No. 4,055,541 and are prepared by mixing (a) 100 parts by weight of at least one non-cycloaliphatic epoxy resin and (b) from 1 to 1000 parts by weight of at least one amine-terminated liquid polymer having a carbon to carbon backbone which may be polybutadiene or a copolymer of butadiene with styrene or acrylonitrile. The compositions may also include a curing agent and are useful inter alia as castable elastomeric systems and as sealants and adhesives.

The present invention provides a composition which gives excellent structural strength coupled with low moisture vapor permeability.

The present invention provides a liquid or extrudable composition curable to a rubbery solid characterised in that it comprises a mixture of:—

(a) from 10% to 50% by weight of the total composition of a liquid thiol-terminated polysulfide polymer;

(b) from 10% to 50% by weight of the total composition of a liquid epoxy resin; and

(c) from 23.64% to 70% by weight of the total composition of a liquid amine-terminated polymer comprising more than 50% of the combined weights of the polysulfide polymer and the epoxy resin and containing, on the average from 1.7 to 4 amino groups per molecule and having the general formula:

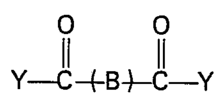

(I)

in which each Y is a univalent organic group obtained by the removal of an amine hydrogen atom from an aliphatic, alicyclic, heterocyclic or aromatic amine containing from 2 to 20 carbon atoms and at least 2 amino groups, at least 2 of said amino groups being primary or secondary amino groups and B is a polymeric backbone comprising butadiene units.

The compositions of the invention are viscous, pourable or extrudable liquids curable to rubbery solids having excellent adhesion to wood, metal, glass, concrete and other construction materials, thus indicating their usefulness in the fabrication of insulating glass window sealants and architectural caulks as well as formulating cure *in situ* gaskets for window units in automobiles, trains, trucks, ships and aircraft.

A particularly preferred embodiment of this composition is a two-part sealant composition packed so that the liquid thiol-terminated polysulfide polymer and the amino-terminated polymer as defined above comprise one package and the liquid epoxy resin comprises a second package. The two packages are admixed to provide the three component composition defined above.

The invention also provides a cured elastomeric product comprising the reaction product of a mixture of:—

(a) from 10% to 50% by weight of the total product of a liquid thiol-terminated polysulfide polymer;

(b) from 10% to 50% by weight of the total product of a liquid epoxy resin; and

(c) from 25.64% to 70% by weight of the total product of a liquid amine-terminated polymer having the general formula I.

The invention also provides an article of manufacture characterised in that it comprises a substrate coated upon at least one surface thereof with a cured elastomer comprising the reaction products of a mixture of:—

(a) from 10% to 50% by weight of the total composition of a liquid thiol terminated polysulfide polymer;

(b) from 10% to 50% by weight of the total composition of a liquid epoxy resin; and

(c) from 23.64% to 70% by weight of the total composition of a liquid amine-terminated polymer having the general formula I.

The production and use of the compositions of the present invention will now be described with reference to a specific embodiment thereof, namely an insulated window sealant comprising the reaction product of a liquid thiol terminated polysulfide polymer based upon bis (2-chloroethyl) formal containing 2.0% of crosslinking, having approximately 6.6% of —SH groups and an average molecular weight of approximately 1,000 (Polysulfide Polymer A), a liquid bisphenol A based epoxy resin having a molecular weight of 350 to 400 and an epoxide equivalent of 175—210 (Shell Chemical Co.) and a liquid amine-terminated butadiene-acrylonitrile copolymer having the general formula:

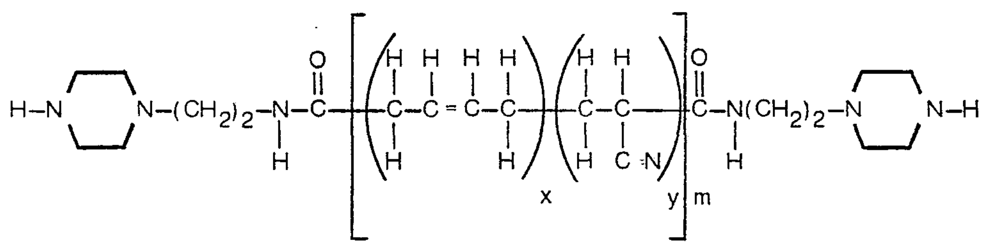

where x = 5, y = 1 and m = 10 (approximately) (B.F. Goodrich Co.).

To prepare the sealant, one may mix the three liquid polymers together in any conventional mixing equipment or paint milling equipment together with any desired conventional sealant additives, such as pigments or fillers, viscosity and sag control agents and adhesion promotors, apply the mixed sealant to the channel of an insulated glass window unit and allow curing to take place.

It will be recognised that the thiol terminated liquid polysulfide polymer and the amine-terminated liquid butadiene acrylonitrile copolymer both contain active hydrogen functional groups sufficient to initiate a curing reaction with the epoxy resin and that once initiated, such cure may be expected to continue until complete cure of the epoxy resin is achieved. If storage stability of the sealant is desired, the uncured material may be formulated as a two package system with one package comprising the liquid polysulfide polymer and the liquid butadieneacrylonitrile copolymer and the other package comprising the epoxy resin. It is preferred for maximum storage stability that the majority of the fillers be packaged with the epoxy resin and that a sufficient amount of an inert pigment such as titanium dioxide be added to the polysulfide-butadiene-acrylonitrile mixture to ensure lack of phase separation. The exact amount of this inert pigment is, of course, not particularly critical. It may be readily determined by a simple graded series of experiments by one skilled in the art and for titanium dioxide may range upwards from 4.0% by weight of the combined weights of the polysulfide polymer and the butadiene-acrylo-nitrile polymer. Blending of the two-part mixture may be accomplished just prior to application to the desired substrate. Conventional mixing and application techniques, as stated hereinabove, will be applicable to this process also.

It will also be recognised that in addition to the particular thiol-terminated liquid polysulfide polymer based on bis(2-chloroethyl)formal of about 1,000 molecular weight and having about 2% crosslinking any of the well-known thiol-terminated liquid polysulfide polymers having the general formula

$$HS{-}(R{-}S_x)_n{-}R{-}SH$$

wherein

R is a hydrocarbon, oxahydrocarbon or thiahydrocarbon diradical such as the ethyl formal diradical ($-CH_2-CH_2-O-CH_2-O-CH_2-CH_2-$), the butyl formal diradical ($-CH_2-CH_2-CH_2-CH_2-O-CH_2-O-CH_2-CH_2-CH_2-CH_2-$), the ethyl ether diradical ($-CH_2-CH_2-O-CH_2-CH_2-$), and the butyl ether diradical ($-CH_2-CH_2-CH_2-CH_2-O-CH_2-CH_2-CH_2-CH_2-$), and x is 2 to 4 and n may vary from 4 to 23 may be employed. These polymers are described in U.S. Patent No. 2,466,963.

Those skilled in the art will also recognise that in addition to the liquid epoxy resin designated above, any liquid epoxy resin may be employed in the practice of the invention. Epoxy resins commercially available in the United States are considered to be derived from the diglycidyl ether of bisphenol A and its homologues, glycidyl ethers of bisphenol F, glycidyl ethers of glycerol, glycidyl ethers of tetrakis (hydroxy phenyl) ethane and epoxylated novolacs. The bisphenol A derivatives are believed to predominate. Typical, liquid epoxy resins which may be commercially obtained and which are difunctional bisphenol A based materials unless otherwise noted are: ARALDITE 502, 6005, 6010, 6020 and 6030 by Ciba-Geigy Co.; D.E.R. 331, 332 and 334 by the Dow Chemical Co.; EPI REZ 510 by the Jones-Dabney Co.; and EPON 562 (aliphatic based), 815, 820, 828 and 834 by the Shell Chemical Co. The designations ARALDITE, D.E.R., EPI REZ and EPON are Registered Trade Marks in many countries. Typical compounds which may be employed in the synthesis of other liquid epoxy resins suitable for use in the practice of this invention are:

Halohydrins, such as epichlorohydrin, dichlorohydrin, and 1,2-dichloro-3-hydroxy-propane.

Diepoxides, such as butadiene dioxide and diglycidyl ether.

Mononuclear di- and tri-hydroxyphenols, such as resorcinol, hydroquinone, pyrocatechol, saligenin and phloroglucinol, polynuclear polyhydroxy phenols, such as bisphenol A, bisphenol F, tri-hydroxy diphenyl dimethyl methane, 4,4′-dihydroxy biphenyl, long chain bisphenols of the general structure

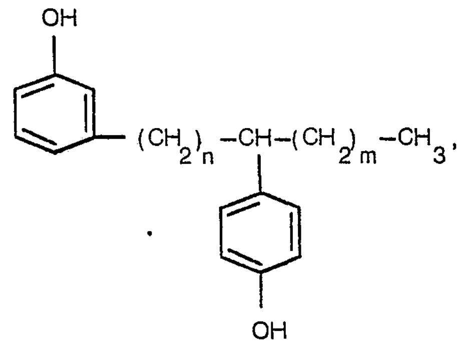

dihydroxydiphenyl sulfone and novolac resins of the general formula

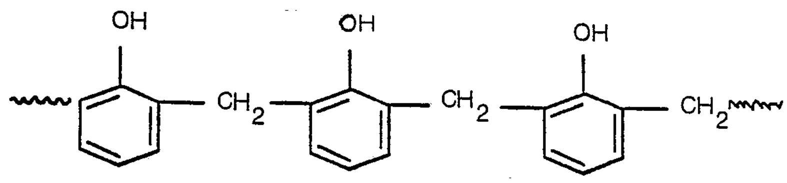

and polyalcohols, such as ethylene glycol, 2,3-butanediol, glycerol and erythritol.

Similarly, it will be recognised that in addition to the amine-terminated butadiene-acrylonitrile copolymer described, any liquid amine-terminated polybutadiene resin such as those described in U.S. Patent No. 4,058,657 may be employed as a full equivalent in formulating the liquid compositions of this invention.

Those skilled in the art will recognise that the relative proportions of the polysulfide polymer, the epoxy resin and the amine-terminated butadiene acrylonitrile polymer may vary through wide limits. Conveniently, one may employ from 10% to 50% by weight of polysulfide polymer, preferably from 20% to 30% thereof, from 10% to 50% by weight of epoxy resin, preferably from 20% to 30% by weight thereof and from 23.64% to 70% by weight of an amine-terminated butadiene-acrylonitrile polymer, preferably from 45% to 55% thereof. If the active hydrogen or epoxy functionality of a particular ingredient chosen varieties substantially from the values of the particular polysulfide polymer, epoxy resin and amine-terminated butadiene acrylonitrile polymer illustrated then one skilled in the art should adjust the relative percentages accordingly. Other ingredients, such as pigments, fillers, thixotropic and sag control agents and adhesion promoters may, if desired, be employed in quantities similar to those employed in known formulations in the art.

The following examples further illustrate the best mode contemplated by us for the practice of this invention. The words THIXCIN, SANTICISER and HYCAR are Registered Trade Marks in many countries.

Example 1

A two-part sealant is formulated from the ingredients listed in the quantities in parts by weight (pbw) shown and mixed. Physical properties and results of ASTM proposed standard E6P1 for testing seal longevity of insulating glass units are shown.

| Part A | Quantity |
|---|---|
| Polysulfide Polymer A | 52 |
| HYCAR ATBN (1300 × 16) | 100 |
| Titanium dioxide | 7 |
| Part B | |
| THIXIN GR (a thixotropic agent) | 10 |
| SANTICIZER 278 (phthalate plasticizer) | 30 |
| $CaCO_3$ (CAMELTEX) | 40 |
| $CaCO_3$ (HOMOCAL G—50) | 27 |
| $CaCO_3$ (KOTAMITE) | 101 |
| Glycidoxypropyltrimethoxysilane | 4 |
| Bis-phenol A based epoxy resin | 52 |

Properties

| | |
|---|---|
| Sag, Vertical (m.m.) | 3.17 |
| Tensile (kg/cm²) | 48.4 |
| Elongation (%) | 100 |
| Modulus, 100% (kg/cm²) | 48.4 |
| Durometer Hardness (Shore A) (1 week cure) | 80 |

Performance in Window Units (2 units) (2 of 4 channels filled with molecular sieve dessicant).

| | A | B |
|---|---|---|
| Original Dew Point °C | >—67.8 | >—67.8 |
| Dew Point (°C) at: | | |
| 2 wks. at 60°C/100% relative Humidity (R.H.) + 24 hrs at room temperature (R.T.) | 61.1 | —58.9 |
| 2 wks. in SIGMA* tower + 24 hrs at R.T. | —62.2 | —57.8 |
| 4 wks. in SIGMA tower + 24 hrs at R.T. | —56.7 | —57.8 |
| 8 wks. in SIGMA tower + 24 hrs at R.T. | —49.4 | —47.2 |
| plus | | |
| 2 wks at 60°C/100% R.H. + 24 hrs. at R.T. | —48.3 | —46.1 |
| 2 wks. in SIGMA tower + 24 hrs. at R.T. | —43.3 | —40 |
| plus | | |
| 2 wks. at 60°C/100% R.H. + 24 hrs. at R.T. | —21.1 | —17.8 |

Example 1 (continued)

| | A | B |
|---|---|---|
| Angular Fog by 12 GP8** test | | |
| Performance with all 4 channels filled with molecular sieve dissicants (values average of 2 units) | | |
| Original Dew Point (°C) | >—67.8 | |
| Dew Point (°C) at: | | |
| 2 weeks at 60°C/100% R.H. + 24 hrs. at R.T. | >—67.8 | |
| 4 weeks SIGMA tower + 24 hrs. R.T. | >—67.8 | |
| 8 weeks SIGMA tower + 24 hrs. R.T. | —66.6 | |
| plus | | |
| 2 weeks at 60°C/100% R.H. + 24 hrs. at R.T. | —63.9 | |
| 2 weeks in SIGMA tower + 24 hrs. R.T. | —62.2 | |
| plus | | |
| 2 weeks at 60°C/100% R.H. + 24 hrs. at R.T. | —58.9 | |
| 2 weeks in SIGMA tower + 24 hrs. R.T. | —58.9 | |

At this point, the window units exceed SIGMA Class A level rating which requires Dew Point of —28.9°C or lower.

Continue testing:

| | | |
|---|---|---|
| 2 weeks at 60°C/100% R.H. + 24 hrs. at R.T. | —57.8 | |
| 2 weeks in SIGMA tower + 24 hrs. at R.T. | —58.9 | |

*Sealed Insulating Glass Manufacturers Assoc. Specification 65—7—2 (1974 edition).
**Standards Council of Canada Standard CAN2—12.8—M76 (formerly CGSB 12—GP—8M).

Example 2

A thiol terminated liquid polysulfide polymer with 0.5% crosslinking and substantially 4,000 molecular weight and approximately 1.6%—SH content (polysulfide polymer B), EPON 828 and HYCAR ATBN are blended in the proportions shown in pbw, absence of cure and physical and adhesion to glass properties of those blends which cured are shown.

| | 1 | 2 | 3 | 4 | 5 | 6 | 7 |
|---|---|---|---|---|---|---|---|
| Polysulfide polymer B | 100 | 100 | 100 | 100 | 100 | 100 | 100 |
| EPON 828 | 100 | 100 | 100 | 100 | 100 | 100 | 100 |
| HYCAR ATBN | 10 | 40 | 70 | 100 | 130 | 160 | 190 |
| Hardness (Shore A) | | | | | | | |
| 1 day | no cure | no cure | no cure | | ~20 | ~25 | ~30 |
| 2 days | no cure | no cure | no cure | surface cure | ~35 | ~45 | ~55 |
| 7 days | no cure | no cure | no cure | | ~75 | ~78 | ~80 |
| Adhesion to Glass (1 week) | — | — | — | — | + | + | + |
| Tensile (Kg/cm$^2$) Elongation (%) (est.) | | | | | | | |
| 1 day | — | — | — | — | 8.79/ 600 | 14.06/ 500 | 25.19/ 400 |
| 7 days | — | — | — | — | >25.19/ >400 | >25.19/ >400 | >25.19/ >400 |

In formulations 1—4 the weight of amine-terminated liquid butadiene polymer (HYCAR ATBN) is less than or equal to 50% of the sum of the weights of the polysulfide polymer and the epoxy resin: thus these formulations are outside the scope of the present invention.

Example 3

Similarly to Example 2, polysulfide polymer B, EPON 828 and HYCAR ATBN are blended in the proportions shown. The physical properties of the cured blends are shown.

| | | | | |
|---|---|---|---|---|
| Polysulfide polymer B | 100 | 100 | 100 | 100 |
| EPON 828 | 100 | 100 | 100 | 100 |
| HYCAR ATBN | 210 | 240 | 270 | 300 |
| Hardness (Shore A) | | | | |
| 1 day | 30 | 32 | 33 | 35 |
| 2 days | 52 | 60 | 60 | 60 |
| 3 days | 75 | 77 | 77 | 75 |

**Claims for the contracting states: BE CH DE FR GB IT NL SE**

1. A liquid or extrudable composition curable to a rubbery solid characterised in that it comprises a mixture of:—

(a) from 10% to 50% by weight of the total composition of a liquid thiol-terminated polysulfide polymer;

(b) from 10% to 50% by weight of the total composition of a liquid epoxy resin; and

(c) from 23.64% to 70% by weight of the total composition of a liquid amine-terminated polymer comprising more than 50% of the combined weights of the polysulfide polymer and the epoxy resin and containing, on the average, from 1.7 to 4 amino groups per molecule and having the general formula:

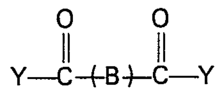

in which each Y is a univalent organic group obtained by the removal of an amine hydrogen atom from an aliphatic, alicyclic, heterocyclic or aromatic amine containing from 2 to 20 carbon atoms and at least 2 amino groups, at least 2 of said amino groups being primary or secondary amino groups and B is a polymeric backbone comprising butadiene units.

2. A two package liquid composition curable to a rubbery solid characterised in that the package respectively contain the following ingredients:

Package A

(a) from 10% to 50% by weight of the total composition of a liquid thiol-terminated polysulfide polymer; and

(b) from 23.64% to 70% by weight of the total composition of a liquid amine-terminated polymer as defined in claim 1

Package B

(c) from 10% to 50% by weight of the total composition of a liquid epoxy resin.

3. A composition as claimed in claims 1 or 2 further characterised in that said liquid thio-terminated polysulfide polymer is based on bis (2-chloroethyl) formal containing 2.0% of crosslinking and of approximately 1,000 average molecular weight, in that said liquid bisphenol A based epoxy resin has a molecular weight of from 350 to 400 and an epoxide equivalent of 175—210; and in that said liquid amine-terminated butadiene acrylonitrile copolymer has the general formula:—

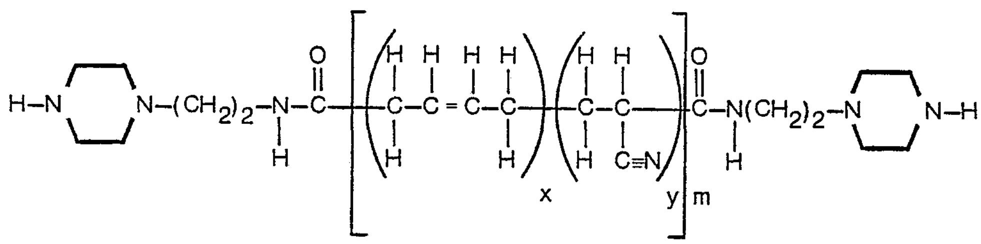

wherein

x is 5, y is 1 and m is 10 (approximately).

4. A composition as claimed in any of claims 1 to 3 further characterised in that it comprises from 20% to 30% by weight of said polysulfide polymer, from 45% to 55% by weight of said amine-terminated butadiene acrylonitrile polymer and from 20% to 30% by weight of said epoxy resin, all based upon the total composition.

5. A composition as claimed in claim 1 to 3 further characterised in that it comprises 52 parts by weight of a liquid thiol-terminated polysulfide polymer based on bis(2-chloroethyl) formal containing 2.0 of cross-linking, having approximately 6.6% —SH and an average molecular weight of approximately 1,000; 100 parts by weight of an amine-terminated butadiene-acrylonitrile polymer having the general formula:—

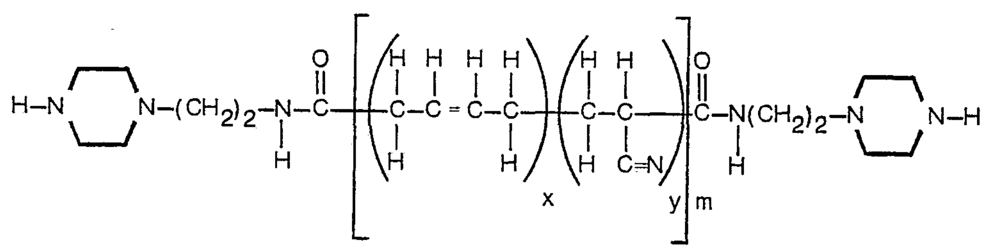

in which $x = 5$, $y = 1$ and $m = 10$; and 52 parts by weight of a bisphenol A based epoxy resin having a molecular weight of 350 to 400 and epoxide equivalent of 175—210.

6. A cured elastomeric product characterised in that it comprises the reaction product of a mixture of

(a) from 10% to 50% by weight of the total product of a liquid thiol-terminated polysulfide polymer;

(b) from 10% to 50% by weight of the total product of a liquid epoxy resin; and

(c) from 23.64% to 70% by weight of the total product of a liquid amine-terminated polymer as defined in claim 1.

7. An article of manufacture characterised in that it comprises a substrate coated upon at least one surface thereof with a cured elastomer comprising the reaction product of a mixture of

(a) from 10% to 50% by weight of the total composition of a liquid thiol-terminated polysulfide polymer;

(b) from 10% to 50% by weight of the total composition of a liquid epoxy resin; and

(c) from 23.64% to 70% by weight of the total composition of a liquid amine-terminated polymer as defined in claim 1.

**Claims for the contracting state: AT**

1. The method of mixing a composition which is curable to a rubbery solid characterised in that it comprises mixing

(a) from 10% to 50% by weight of the total composition of a liquid thiol-terminated polysulfide polymer;

(b) from 10% to 50% by weight of the total composition of a liquid epoxy resin; and

(c) from 23.64% to 70% by weight of the total composition of a liquid amine-terminated polymer comprising more than 50% of the combined weights of the polysulfide polymer and the epoxy resin and containing, on the average, from 1.7 to 4 amino groups per molecule and having the general formula:

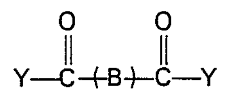

in which each Y is a univalent organic group obtained by the removal of an amine hydrogen atom from an aliphatic, alicyclic, heterocyclic, or aromatic amine containing from 2 to 20 carbon atoms and at least 2 amino groups, at least 2 of said amino groups being primary or secondary amino groups and B is a polymeric backbone comprising butadiene units to form a mixture which is curable to a rubbery solid.

2. The method of mixing a composition which is curable to a rubbery solid characterised in that it comprises

(1) premixing in a package A

(a) from 10% to 50% by weight of the total composition of a liquid thiol-terminated polysulfide polymer; and

(b) from 23.64% to 70% by weight of the total composition of a liquid amine-terminated polymer as defined in claim 1,

(2) mixing package A with a package B containing from 10% to 50% by weight of the total composition of a liquid epoxy resin, to form a mixture which is curable to a rubbery solid.

3. A process as claimed in claim 1 or 2 further characterised in that said liquid thiol-terminated polysulfide polymer is based on bis (2-chloroethyl) formal containing 2.0% of crosslinking and of approximately 1,000 average molecular weight, in that said liquid bisphenol A based epoxy resin has a molecular weight of from 350 to 400 and an epoxide equivalent of 175—210; and in that said liquid amine-terminated butadiene acrylonitrile copolymer has the general formula:

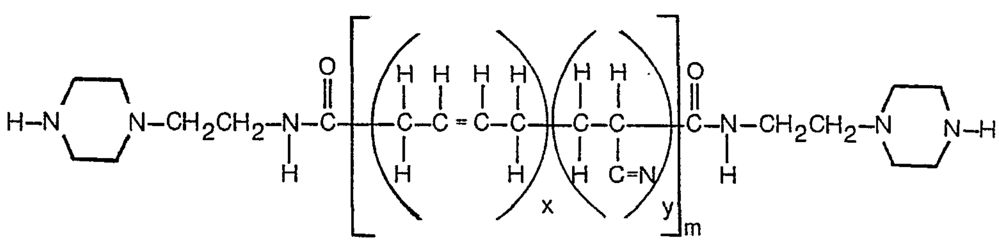

wherein

x is 5, y is 1 and m is 10 (approximately).

4. A process as claimed in any of claims 1 to 3 further characterised in that it employs from 20% to 30% by weight of said polysulfide polymer, from 45% to 55% by weight of said amine-terminated butadiene acrylonitrile polymer and from 20% to 30% by weight of said epoxy resin.

**Revendications pour les Etats contractants: BE CH DE FR GB IT NL SE**

1. Une composition liquide ou extrudable durcissable en un solide caoutchouteux, caractérisée en ce qu'elle consiste en un mélange de

(a) 10% à 50% en poids, par rapport à la composition totale, d'un polymère liquide de polysulfure à terminaisons thiol;

(b) 10% à 50% en poids, par rapport à la composition totale d'une résine époxy liquide; et

(c) 23,64% à 70% en poids, par rapport à la composition totale, d'un polymère liquide à

terminaisons amine représentant plus de 50% du poids total du polymère de polysulfure et de la résine époxy et contenant en moyenne 1,7 à 4 groupes amino par molécule et ayant la formule générale:

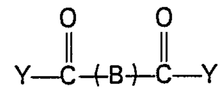

dans laquelle chaque reste Y est un groupe organique monovalent obtenu par enlèvement d'un atome d'hydrogène d'amine d'une amine aliphatique, alicyclique, hétérocyclique ou aromatique en $C_2$—$C_{20}$ et ayant au moins 2 groupes amino, au moins deux desdits groupes amino étant des groupes amino primaires ou secondaires, et B est un squelette polymère comprenant des motifs butadiène.

2. Une composition liquide en deux emballages, durcissable en un solide caouthcouteux, caractérisée en ce que les emballages contiennent respectivement les ingrédients suivants:

Emballage A

(a) de 10% à 50% en poids, par rapport à la composition totale, d'un polymère liquide de polysulfure à terminaisons thiol; et

(b) de 23,64% à 70% en poids, par rapport à la composition totale, d'un polymère liquide à terminaisons amine tel que défini à la revendication 1;

Emballage B

(c) de 10% à 50% en poids, par rapport à la composition totale, d'une résine époxy liquide.

3. Une composition selon les revendications 1 et 2, caractérisée en outre en ce que ledit polymère liquide polysulfure à terminaisons thiol est un polymère à base de bis(2-chloroéthyl)formal réticule à 2,0% et ayant un poids moléculaire moyen d'environ 1000, en ce que ladite résine époxy liquide à base de bisphénol A a un poids moléculaire de 350 à 400 et un équivalent d'époxyde de 175—210; et en ce que ledit copolymère liquide butadiène-acrylonitrile répond à la formule générale:

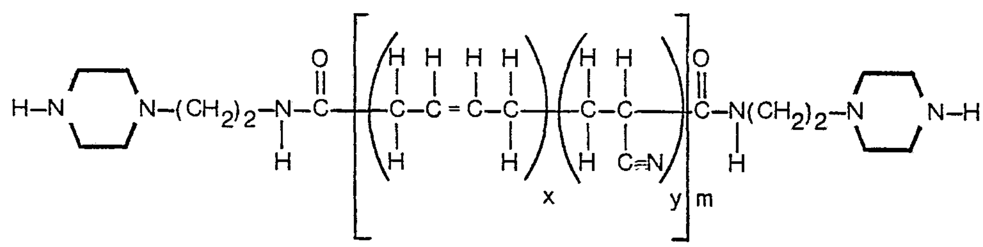

dans laquel le x est égal à 5 et y est égal 1 et m est égal à 10 (environ).

4. Une composition selon l'une des revendications 1 à 3, caractérisée en outre en ce qu'elle contient de 20% à 30% en poids dudit polymère de polysulfure, de 45% à 55% en poids dudit polymère butadiène-acrylonitrile à terminaisons amine et de 20 à 30% en poids de ladite résine époxy, tous les pourcentages étant rapportés à la composition totale.

5. Une composition selon les revendications 1 à 3, caractérisée en outre en ce qu'elle contient 52 parties en poids d'un polymère liquide de polysulfure à terminaisons thiol à base de bis(2-chloroéthyl)formal, réticulé à 2,0%, ayant une teneur en SH d'environ 6,6% et un poids moléculaire moyen d'environ 1000; 100 parties en poids d'un polymère butadiène-acrylonitrile à terminaisons amine de formule générale:

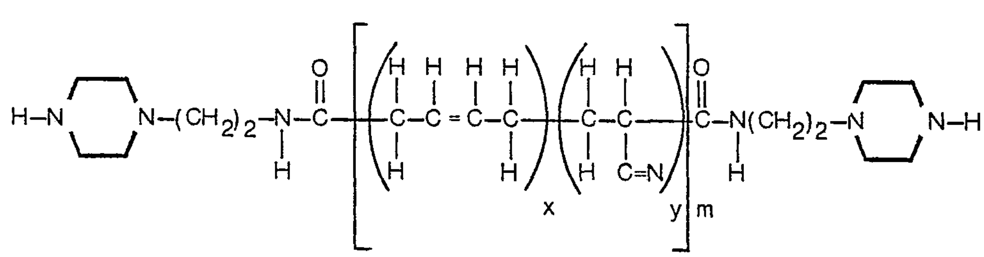

dans laquelle x = 5, y = 1 et m = 10; et 52 parties en poids d'une résine époxy à base de bisphénol A ayant un poids moléculaire de 350 à 400 et un équivalent d'époxyde de 175—210.

6. Un produit élastomère durci, caractérisé en ce qu'il consiste en le produit de réaction d'un mélange de

(a) 10% à 50% en poids, par rapport au produit total, d'un polymère liquide de polysulfure à terminaisons thiol;

(b) 10% à 50% en poids, par rapport au produit total, d'une résine époxy liquide; et

(c) 23,64 à 70% en poids, par rapport au produit total, d'un polymère liquide à terminaisons amine tel que défini à la revendication 1.

7. Un article fabriqué, caractérisé en ce qu'il comprend un substrat revêtu sur au moins une surface d'un élastomère durci comprenant le produit de réaction d'un mélange de

(a) 10% à 50%, par rapport à la composition totale, d'un polymère liquide de polysulfure à terminaisons thiol;

(b) 10% à 50% en poids, par rapport à la composition totale, d'une résine époxy liquide; et

(c) 23,64% à 70% en poids, par rapport à la composition totale, d'un polymère liquide à terminaisons amine tel que défini à la revendication 1.

**Revendications pour l'Etat contractant: AT**

1. Le procédé de mélange d'une composition qui est durcissable en un solide caoutchouteux, caractérisé en ce qu'il consiste à mélanger

(a) 10% à 50% en poids par rapport à la composition totale, d'un polymère liquide de polysulfure à terminaisons thiol;

(b) 10% à 50% en poids, par rapport à la composition totale, d'une résine époxy liquide; et

(c) 23,64% à 70% en poids, par rapport à la composition totale, d'un polymère liquide à terminaisons amine représentant plus de 50% du poids total du polymère de polysulfure et de la résine époxy et contenant en moyenne 1,7 à 4 groupes amino par molécule et ayant la formule générale:

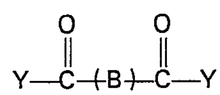

dans laquelle chaque reste Y est un groupe organique monovalent obtenu par enlèvement d'un atome d'hydrogène d'amine d'une amine aliphatique, alicyclique, hétérocyclique, ou aromatique en $C_2$—$C_{20}$ et ayant au moins deux groupes amino, au moins deux desdits groupes amino étant des groupes amino primaires ou secondaires et B est un squelette polymère comprenant des motifs butadiène, pour former un mélange qui est durcissable en une matière solide caoutchouteuse.

2. Le procédé de mélange d'une composition qui est durcissable en un solide caoutchouteux, caractérisé en ce qu'il consiste

(1) à mélanger au préalable dans un emballage A

(a) 10% à 50% en poids, par rapport à la composition totale, d'un polymère liquide de polysulfure à terminaisons thiol; et

(b) 23,64% à 70% en poids, par rapport à la composition totale, d'un polymère liquide à terminaisons amine tel que défini à la revendication 1;

(2) à mélanger l'emballage A avec un emballage B contenant de 10% à 50% en poids, par rapport à la composition totale, d'une résine époxy liquide, pour former un mélange qui est durcissable en une matière solide caoutchouteuse.

3. Un procédé selon la revendication 1 ou 2, caractérisé en outre en ce que ledit polymère liquide de polysulfure à terminaisons thiol est un polymère à base de bis(2-chloroéthyl)formal réticulé à 2,0% et ayant un poids moléculaire moyen d'environ 1000, en ce que ladite résine époxy liquide à base de bisphénol A a un poids moléculaire de 350 à 400 et un équivalent d'époxyde de 175—210; et en ce que ledit copolymère liquide butadiène-acrylonitrile à terminaisons amine répond à la formule générale

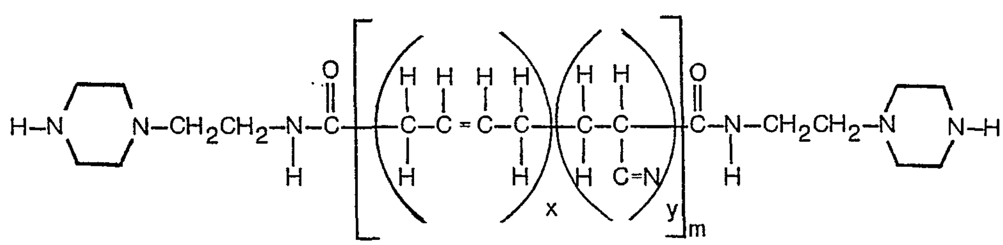

dans laquelle x est égal à 5, y est égal à 1 et m est égal à 10 (environ).

4. Procédé selon l'une quelconque des revendications 1 à 3, caractérisé en outre en ce qu'il utilise 20% à 30% en poids dudit polymère de polysulfure, 45% à 55% en poids dudit polymère butadiène-acrylonitrile à terminaisons amine et 20% à 30% en poids de ladite résine époxy.

**Patentansprüche für die Vertragsstaaten: BE CH DE FR GB IT NL SE**

1. Eine flüssige oder extrudierbare Zusammensetzung, die zu einem gummiartigen Feststoff härtbar ist, dadurch gekennzeichnet, daß die Zusammensetzung eine Mischung aus nachstehenden Bestandteilen darstellt, nämlich

(a) ein flüssiges, Thiol-Endgruppen aufweisendes Polysulfid-Polymer in einem Anteil von 10 bis 50% des Gesamtgewichtes;

(b) ein flüssiges Epoxyharz in einem Anteil von 10 bis 50% des Gesamtgewichtes; und

(c) ein flüssiges, Amino-Endgruppen aufweisendes Polymer in einem Anteil von 23,64 bis 70% des Gesamtgewichtes, in jedem Falle jedoch in einem Anteil von mehr als 50% der kombinierten Gewichte des Polysulfid-Polymers und des Epoxyharzes, enthaltend im Mittel 1,7 bis 4 Aminogruppen pro Molekül und mit einem Aufbau entsprechend der nachstehenden allgemeinen Strukturformel:

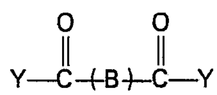

wobei Y für einen einwertigen organischen Rest steht, der durch Entfernung eines Amin-Wasserstoffatomes aus einem aliphatischen, alicyclischen, heterocyclischen oder aromatischen Amin erhalten wurde, das 2 bis 20 C-Atome und wenigstens 2 Aminogruppen enthält, wobei wenigstens 2 dieser Aminogruppen primäre oder sekundäre Aminogruppen sind, und B eine Polymerhauptkette mit Butadieneinheiten ist.

2. Eine flüssige, Zwei-Komponenten-Zusammensetzung, die zu einem gummiartigen Feststoff härtbar ist, dadurch gekennzeichnet, daß diese Zusammensetzung die nachstehenden Bestandteile aufweist:

Komponente A:

(a) ein flüssiges, Thiol-Endgruppen aufweisendes Polysulfid-Polymer in einem Anteil von 10 bis 50% des Gesamtgewichtes; und

(b) ein flüssiges, Amino-Gruppen aufweisendes Polymer wie in Anspruch 1 definiert, in einem Anteil von 23,64 bis 70% des Gesamtgewichts;

Komponente B:

(c) ein flüssiges Epoxyharz in einem Anteil von 10 bis 50% des Gesamtgewichtes.

3. Zusammensetzung nach Anspruch 1 oder 2, dadurch gekennzeichnet, daß das flüssige, Thiol-Endgruppen aufweisende Polysulfid-Polymer basiert auf Bis(2-Chloräthyl)-formal, mit 2%-iger Vernetzung und mit einem mittleren Molekulargewicht von angenähert 1000; das Epoxyharz basiert auf einem flüssigen Bisphenol-A mit einem Molekulargewicht von 350 bis 400 und mit einem Epoxid-Äquivalent von 175 bis 210; und das flüssige, Amino-Endgruppen aufweisende Butadien/Acrylnitril-Copolymer einen Aufbau entsprechend der nachstehenden allgemeinen Strukturformel aufweist:

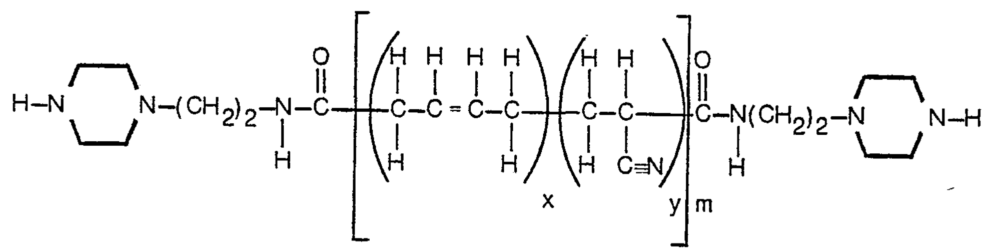

wobei x = angenähert 5, y = angenähert 1 und m = angenähert 10.

4. Eine Zusammensetzung nach einem der Ansprüche 1 bis 3, dadurch gekennzeichnet, daß die Zusammensetzung 20 bis 30 Gew.-% Polysulfid-Polymer, 45 bis 55 Gew.-% Amino-Endgruppen aufweisendes Butadien/Acrylnitril-Polymer und 20 bis 30 Gew.-% Epoxyharz enthält, jeweils bezogen auf die gesamte Zusammensetzung.

5. Zusammensetzung nach einem der Ansprüche 1 bis 3, dadurch gekennzeichnet, daß die Zusammensetzung enthält: 52 Gew.-Teile flüssiges, Thiol-Endgruppen aufweisendes Polysulfid-Polymer auf der Basis von Bis(2-Chloräthyl)-Formal mit 2%-iger Vernetzung, mit einem SH-Gruppengehalt von angenähert 6,6%, mit einem mittleren Molekulargewicht von angenähert 1000; 100 Gew.-Teile eines Amino-Endgruppen aufweisenden Butadien/Acrylnitril-Polymers mit einem Aufbau entsprechend der nachstehenden allgemeinen Strukturformel:

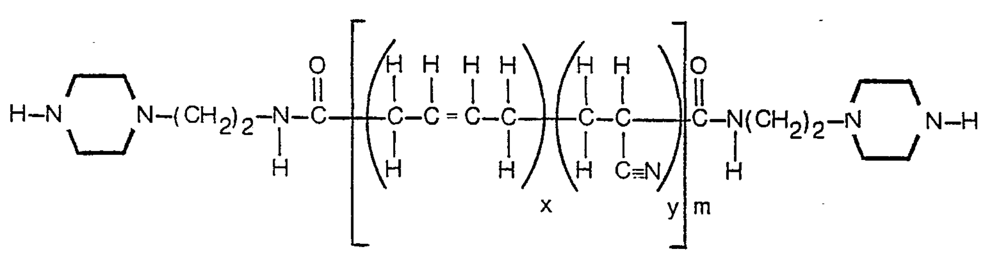

wobei x = 5, y = 1 und m = 10; und 52 Gew.-Teile eines Epoxyharzes auf der Basis von Bisphenol-A mit einem Molekulargewicht von 350 bis 400 und einem Epoxid-Äquivalent von 175—210.

6. Ein gehärtetes, elastomeres Produkt, dadurch gekennzeichnet, daß das elastomere Produkt das Reaktionsprodukt eines Gemisches aus den nachstehenden Bestandteilen ist, nämlich:

(a) ein flüssiges, Thiol-Endgruppen aufweisendes Polysulfid-Polymer in einem Anteil von 10 bis 50% am Gewicht des Gesamtproduktes;

(b) ein flüssiges Epoxyharz in einem Anteil von 10 bis 50% des Gewichtes des Gesamtproduktes; und

(c) ein flüssiges, Amino-Endgruppen aufweisendes Polymer, wie in Anspruch 1 angegeben, in einem Anteil von 23,64 bis 70% des Gewichtes des Gesamtproduktes.

7. Ein Formkörper, dadurch gekennzeichnet, daß der Formkörper ein Substrat ist, das auf wenigstens einer Oberfläche mit einem ausgehärteten Elastomer beschichtet ist, das seinerseits das Reaktionsprodukt eines Gemisches aus den nachstehenden Bestandteilen darstellt, nämlich:

(a) ein flüssiges, Thiol-Endgruppen aufweisendes Polysulfid-Polymer in einem Anteil von 10 bis 50% des Gesamtgewichtes;

(b) ein flüssiges Epoxyharz in einem Anteil von 10 bis 50% des Gesamtgewichtes; und

(c) ein flüssiges, Amino-Endgruppen aufweisendes Polymer, wie in Anspruch 1 bezeichnet, in einem Anteil von 23,64 bis 70% des Gesamtgewichtes.

**Patentansprüche für den Vertragsstaat: AT**

1. Verfahren zur Erzeugung einer Zusammensetzung, die zu einem gummiartigen Feststoff härtbar ist; dadurch gekennzeichnet, daß die nachstehenden Bestandteile miteinander vermischt werden, nämlich:

(a) ein flüssiges, Thiol-Endgruppen aufweisendes Polysulfid-Polymer in einem Anteil von 10 bis 50% des Gesamtgewichtes;

(b) ein flüssiges Epoxyharz in einem Anteil von 10 bis 50% des Gesamtgewichtes; und

(c) ein flüssiges, Amino-Endgruppen aufweisendes Polymer in einem Anteil von 23,64 bis 70% des Gesamtgewichtes, in jedem Falle jedoch in einem Anteil von mehr als 50% der kombinierten Gewichte des Polysulfid-Polymers und des Epoxyharzes, enthaltend im Mittel 1,7 bis 4 Aminogruppen pro Molekül und mit einem Aufbau entsprechend der nachstehenden allgemeinen Strukturformel:

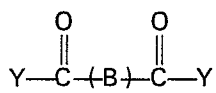

wobei jeder Rest Y eine einwertige organische Gruppe ist, die durch Entfernung eines Amin-Wasserstoffes aus einem aliphatischen, alicyclischen, heterocyclischen oder aromatischen Amin erhalten wurde, welches 2 bis 20 C-Atome und wenigstens 2 Aminogruppen enthält, wobei wenigstens 2 dieser Aminogruppen primäre oder sekundäre Aminogruppen sind, und B eine Polymerhauptkette mit Butadieneinheiten ist, um eine Mischung zu bilden, die zu einem gummiartigen Feststoff aushärtbar ist.

2. Verfahren nach Anspruch 1, dadurch gekennzeichnet, daß

(1) zuerst eine Komponente A gemischt wird, nämlich aus

(a) einem flüssigen, Thiol-Endgruppen aufweisenden Polysulfid-Polymer in einem Anteil von 10 bis 50% des Gesamtgewichtes; und

(b) einem flüssigen, Amino-Endgruppen aufweisenden Polymer wie in Anspruch 1 angegeben, in einem Anteil von 23,64 bis 70% des Gesamtgewichtes; und

(2) mit dieser Komponente A eine zweite Komponente B vermischt wird, die ihrerseits enthält ein flüssiges Epoxyharz in einem Anteil von 10 bis 50% des Gesamtgewichtes, um eine Mischung zu bilden, die zu einem gummiartigen Feststoff härtbar ist.

3. Verfahren nach Anspruch 1 oder 2, dadurch gekennzeichnet, daß als flüssiges, Thiol-Endgruppen aufweisendes Polysulfid-Polymer ein Polymer auf der Basis von Bis(2-Chloräthyl)-formal mit 2% Vernetzung und einem mittleren Molekulargewicht von angenähert 1000 dient; als Epoxyharz ein flüssiges Epoxyharz auf der Basis von Bisphenol A mit einem Molekulargewicht von 350 bis 400 und einem Epoxid-Äquivalent von 175 bis 210 dient; und als flüssiges, Amino-Endgruppen aufweisendes Butadien/Acrylnitril-Copolymer ein Copolymer mit einem Aufbau entsprechend nachstehender allgemeiner Strukturformel dient:

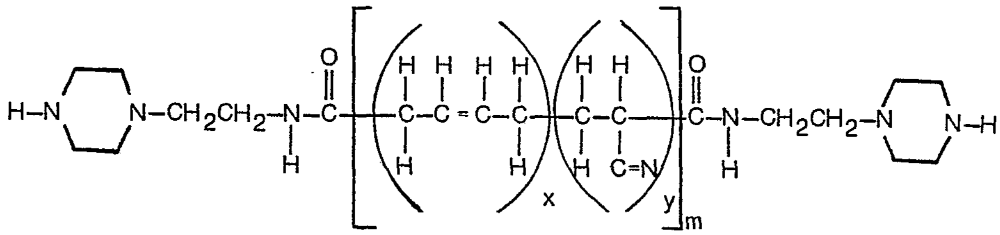

wobei x = angenähert 5, y = angenähert 1 und m = angenähert 10.

4. Verfahren nach einem der Ansprüche 1 bis 3, dadurch gekennzeichnet, daß das Polysulfid-Polymer in einem Anteil von 20 bis 30 Gew.-%, das Amino-Endgruppen aufweisende Butadien/Acrylnitril-Polymer in einem Anteil von 45 bis 55 Gew.-%, und das Epoxyharz in einem Anteil von 20 bis 30 Gew.-% verwendet werden.